# EUROPEAN PATENT APPLICATION

(11) **EP 3 795 873 A1**
(43) Date of publication of application: **24.03.2021**
(21) Application number: 20195408.8
(22) Date of filing: 10.09.2020
(51) Int. Cl.: F16K 31/08, H01L 21/00, F16K 31/06

(54) **SOLENOID VALVE, ASSEMBLY WITH SOLENOID VALVE AND SET OF CONTROL ELECTRONICS, AND PUMP UNIT FOR PROVIDING A HYDRAULIC PRESSURE FOR OPERATING AN ACTUATOR IN THE DRIVETRAIN OF A MOTOR VEHICLE**

(30) Priority: 20.09.2019 DE 102019125426
(71) Applicant: FTE automotive GmbH, 96106 Ebern (DE)
(72) Inventor: LEHNERT, Alexander, D-96106 Ebern (DE); ERDMANN, Michael, D-96106 Ebern (DE); WÜCHNER, Benjamin, D-96106 Ebern (DE); GUERBAOUI, Samir, 95800 Cergy (FR)
(74) Representative: Cardon, Nicolas

(57) **Abstract**

The invention relates to a solenoid valve (4) with a coil (30), with an armature (32), with a valve seat (38), with a valve element (36) which can be forced against the valve seat (38) by the armature (32), and with a spring (40) which forces the armature (32) away from the valve seat (38), characterized in that the armature (32) is assigned a permanent magnet (44). The invention also relates to an assembly with a solenoid valve (4) of said type and with a set of control electronics, wherein the set of control electronics (3) is configured for applying an exciter current with varying polarities to the coil (30).

## Description

The invention relates to a solenoid valve with a coil, with an armature, with a valve seat, with a valve element which can be forced against the valve seat by the armature, and with a spring which forces the armature away from the valve seat. The invention furthermore relates to an assembly with a solenoid valve of said type and with a set of control electronics, and to a pump unit for providing a hydraulic pressure for operating an actuator in the drivetrain of a motor vehicle.

A solenoid valve of said type may be used in particular in a pump assembly by means of which a hydraulic pressure is provided for operating an actuator in the drivetrain of a motor vehicle. The actuator may be in particular a clutch or transmission actuator by means of which a clutch can be opened or closed or a transmission ratio stage of a transmission can be engaged or disengaged.

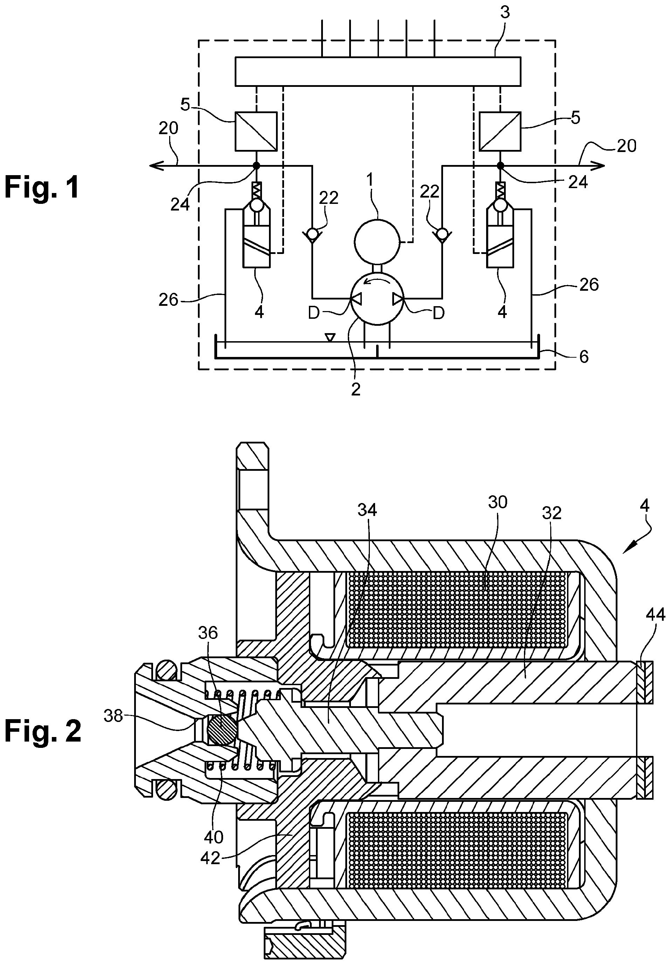

A pump assembly of said type will be described schematically below on the basis of figure 1.

The pump assembly has, as main constituent parts, a drive motor 1, a pump 2, a set of control electronics 3, two solenoid valves 4, two pressure sensors 5, which are accommodated in a common housing, and a reservoir 6.

By contrast to the embodiment shown here with two solenoid valves, it is also possible for a greater number of solenoid valves to be used. It is basically also possible for only a single solenoid valve to be used.

The electric motor 1 may be a brushless electric motor with which the pump 2 is driven. The pump 2 may be designed as a rotary slide pump, in particular as a roller cell pump. The pump 2 draws fluid in from the reservoir 6 and has two mutually independent pressure outlets, each of which is provided for providing a supply to the corresponding one of two mutually independent pressure outlets 20 of the pump assembly.

A check valve 22 is arranged downstream of each pressure outlet D of the pump 2. The inlet 24 of the solenoid valve 4 is situated in each case downstream of the outlet of the check valves 22. In a manner dependent on the setpoint pressure and on the actual pressure measured at the pressure sensor 5, each of the solenoid valves 4 is actuated such that the desired hydraulic pressure prevails at the pressure outlet 20 of the pump assembly. Excess hydraulic fluid is conducted back directly into the reservoir 6 through a return line 26.

The solenoid valves 4 are designed as proportional valves.

In order to close the corresponding solenoid valve, the coil of the solenoid valve is excited such that the armature acts (possibly via an interposed plunger) on the valve element and forces this against the valve seat counter to the action of the spring. If the solenoid valve is to be opened again, the supply of current to the coil is interrupted. The valve element is then (together with the armature) forced away from the valve seat by the spring, such that the flow passage through the solenoid valve is opened again.

It has been found that, in some operating states, the solenoid valve does not open quickly enough, such that the pressure at the corresponding pressure outlet 20 of the pump assembly does not fall quickly enough.

It is the object of the invention to improve a solenoid valve of the type mentioned in the introduction such that the valve seat is opened more quickly upon the deactivation of the solenoid valve.

To achieve this object, in the case of a solenoid valve of the type mentioned in the introduction, it is provided according to the invention that the armature is assigned a permanent magnet. The permanent magnet generates a magnetic force or a magnetic flux by means of which the opening speed of the solenoid valve can be increased.

In a first embodiment of the invention, it is provided that the permanent magnet is arranged in the magnetic circuit of the solenoid valve. "Arranged in the magnetic circuit" means that the permanent magnet is arranged such that a magnetic field strength is present in the magnetic circuit even when a coil is not excited. In this way, the armature is permanently acted on such that it seeks to push the valve element against the valve seat. In other words: The permanent magnet "simulates" an excitation of the coil with a low current which forces the armature in the direction of the closing of the valve seat. This permanent preload of the valve element towards the valve seat is counteracted by virtue of the spring being configured with a greater spring stiffness than is conventional. For example, the spring may impart an opening force of the order of 3 N, whereas it is conventionally the case in such solenoid valves that the opening force provided by the spring is of the order of 1 N.

In an embodiment which is straightforward from a manufacturing aspect, it is provided that the permanent magnet is arranged at a side, averted from the valve seat, of the armature. For example, the permanent magnet may be adhesively bonded there.

In an embodiment which is more complex from a manufacturing aspect, it is provided that the permanent magnet is arranged in the armature of the solenoid valve and divides said armature into a portion facing towards the valve seat and a portion averted from the valve seat. In this embodiment, the permanent magnet generates a greater magnetic field strength.

In an alternative embodiment, it is provided that the permanent magnet is arranged at an end side of the armature which faces towards a yoke of the solenoid valve, and a further permanent magnet is arranged on the yoke, wherein the two permanent magnets repel one another. The repelling action of the two permanent magnets also ensures that the flow passage through the solenoid valve is opened up more quickly when the exciter current of the coil is deactivated.

It is preferably provided that a plunger, on which the spring is supported, is connected to the armature. The plunger ensures a spatial separation between the armature at one side and the valve seat at the other side, which is functionally advantageous.

The invention is also solved by means of an assembly with a solenoid valve which is arranged with a permanent magnet in the magnetic circuit of the solenoid valve, and with a set of control electronics, wherein the set of control electronics is configured for applying an exciter current with varying polarities to the coil. By means of this set of control electronics, it is possible, when the solenoid valve is to be opened, for a current to be applied which opposes the current with which the solenoid valve is closed. In this way, the action of the permanent magnet in the magnetic circuit is compensated or even overcompensated, such that the spring can lift the valve element from the valve seat very quickly.

The solenoid valve according to the invention may particularly advantageously be used in a pump unit for providing a hydraulic pressure for operating an actuator in the drivetrain of a motor vehicle, in particular an actuator for operating a clutch or a transmission, wherein a pump, a reservoir for hydraulic fluid and at least one such solenoid valve are provided.

The solenoid valve according to the invention may particularly advantageously be used for actuating a clutch actuator of a vehicle transmission. In the case of the pressures of the hydraulic flow (3 to 5 bar) that are conventional here, use is then advantageously made of a spring which imparts an opening force of the order of 3 N (rather than the otherwise conventionally used spring with an opening force of 1 N).

The invention will be described below on the basis of various embodiments, which are illustrated in the appended drawings. In the drawings:
- figure 1 schematically shows a pump assembly with solenoid valves;
- figure 2 shows, in a section, a solenoid valve which can be used in the pump assembly of figure 1 and which is designed in accordance with a first embodiment of the invention;
- figure 3 shows, in a section, a solenoid valve which constitutes a variant in relation to the first embodiment shown in figure 2;
- figure 4 shows, in a section, a solenoid valve according to a second embodiment, which can be used in the pump assembly of figure 1; and
- figure 5 shows, in a section, a solenoid valve according to a variant in relation to the second embodiment.

Figure 2 shows a solenoid valve 4 which can be used in the pump assembly illustrated in figure 1 and described in the introduction. The solenoid valve has a coil 30, in the interior space of which an armature 32 is movably arranged. The armature acts via a plunger 34 on a valve element 36 which can interact with a valve seat 38. The plunger is forced by a spring 40 into an opened position in which it is spaced apart from the valve seat 38.

Here, a yoke 42 composed of ferromagnetic material is arranged on that side of the coil 30 which faces towards the valve seat 38. An air gap is present between the yoke 42 and the armature 32 when the armature 32 is situated in the opened position shown in figure 2. Said air gap is at least as large as the stroke performed by the armature 32 during the closing of the valve.

A permanent magnet 44 is fixedly connected to the armature 32. In the exemplary embodiment shown, said permanent magnet is attached to that end side of the armature 32 which is averted from the valve seat 38.

The permanent magnet 44 is ring-shaped and has an outer diameter and an inner diameter, which correspond to the dimensions of the in this case hollow armature 32.

The permanent magnet 44 may be adhesively bonded to the end side of the armature 32.

Owing to its arrangement at the end side of the armature 32, the permanent magnet 44 is situated in the magnetic circuit of the solenoid valve. Said permanent magnet therefore generates, in the magnetic circuit that runs through the armature 32, the yoke 42 and, outside the coil 30, back to the armature 32, a magnetic field strength which seeks to reduce the size of the air gap. In other words: Owing to the permanent magnet 44, a force which seeks to close the valve element 36 is exerted on the armature 32 even when the coil 30 is not electrically energized.

This closing force which is present in the rest state is counteracted by virtue of the stiffness of the spring 40 being selected to be greater than is conventional. In the specific embodiment, an opening force of the order of 3 N is expedient.

In order to close the valve element 36, the coil 30 is electrically energized in the conventional manner by a set of control electronics. Owing to the additional magnetic field strength that results from the permanent magnet 44, the solenoid valve closes in approximately the same way as a conventional solenoid valve, despite the greater opening force of the spring 40.

When the solenoid valve is to be opened, the coil is electrically energized with a polarity which is opposite to the polarity during the closing of the solenoid valve. In this way, the armature 32 is forced in an opening direction. Put simply, the closing force generated by the permanent magnet 44 is hereby compensated. Owing to the higher opening force of the spring 40, the solenoid valve 4 opens altogether more quickly than is the case in a conventional valve.

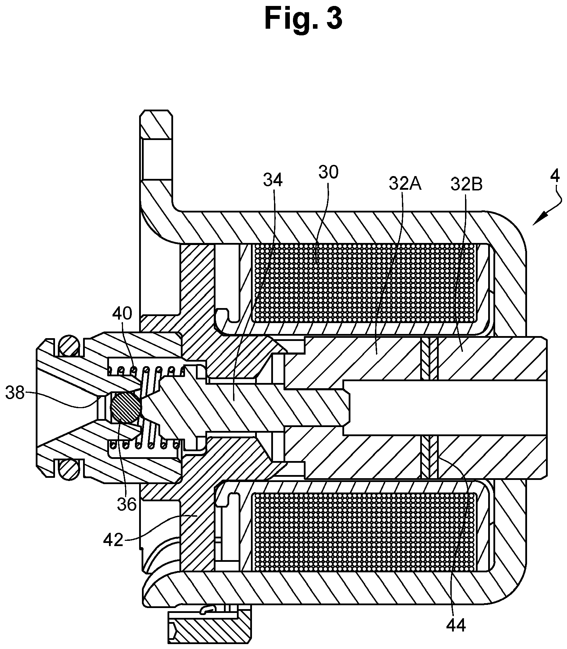

Figure 3 shows an embodiment variant with respect to the embodiment of figure 2. The same reference designations are used for the components known from the solenoid valve of figure 2, and, in this respect, reference is made to the explanations above.

The difference between the solenoid valve of figure 2 and the solenoid valve of figure 3 consists in that, in the solenoid valve of figure 3, the permanent magnet 44 is arranged in the armature of the solenoid valve, that is to say divides this into two portions 32 A, 32 B. Here, the portion 32 A is arranged on the side of the valve seat and is connected to the plunger 34, whereas the portion 32 B projects from the coil 30 on the side averted from the valve seat 38.

Since the permanent magnet 44 is arranged within the armature 32, it is somewhat more effective than the permanent magnet 44 which, in the embodiment of figure 2, is arranged at the end side of the armature 32. Conversely, the armature of the solenoid valve as per figure 3 involves somewhat greater outlay in terms of production.

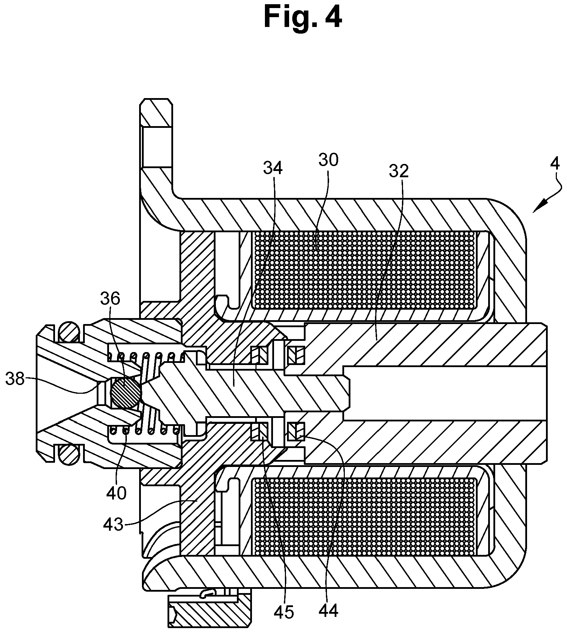

Figure 4 shows a second embodiment of the solenoid valve according to the invention. The same reference designations are used for the components known from figure 2, and, in this respect, reference is made to the explanations above.

The difference between the solenoid valves of figures 2 and 3, on the one hand, and the solenoid valve of figure 4, on the other hand, consists in that, in the case of the solenoid valve of figure 4, a permanent magnetic flux is not realized by means of one permanent magnet, it rather being the case that two permanent magnets 44, 45 are provided, one of which is arranged on the armature 32 and the other of which is arranged in a static manner on the solenoid valve 4. In the embodiment shown, the permanent magnet 45 arranged in a static manner is arranged on a bearing bracket 43 so as to be situated oppositely at the air gap.

The permanent magnets 44, 45 are arranged with opposite polarity, such that they repel one another. Accordingly, the smaller the air gap, a progressively higher force is generated which forces the armature 32 and thus the plunger 34 into an open position. This repelling force between the two permanent magnets 44, 45 thus acts in the same direction as the force of the spring 40. Accordingly, the repelling force between the permanent magnets 44, 45 assists a fast opening of the solenoid valve 4.

In order to compensate the repelling force between the permanent magnets 44, 45, the coil 30 must, in order to close the solenoid valve, be excited with a higher current than is the case if no permanent magnets are present.

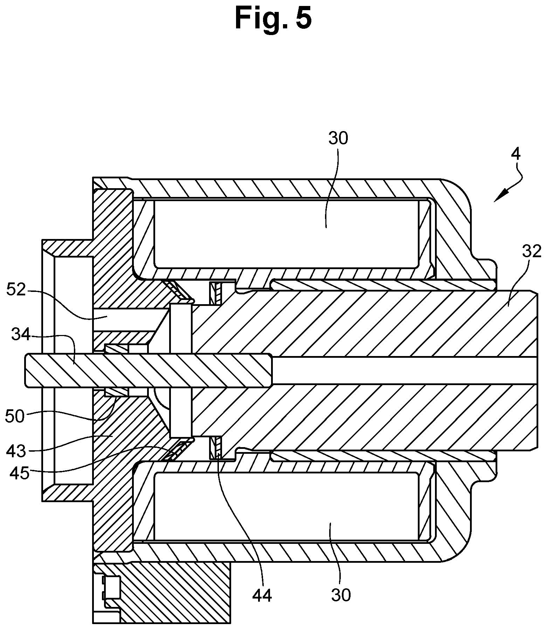

Figure 5 illustrates a design variant with respect to the solenoid valve shown in figure 4. The same reference designations are used for the components known from the solenoid valve of figure 4, and, in this respect, reference is made to the explanations above.

The difference between the embodiment of figure 4 and the variant of figure 5 consists firstly in that, in the variant of figure 5, the permanent magnets 44, 45 are arranged in the outer part of the air gap. Also, here, the permanent magnet 45 is shaped similarly to a disc spring.

A further difference consists in that, in the embodiment of figure 4 (in the same way as in the solenoid valves of figures 2 and 3), a radial free space is present between the plunger 34 and the yoke 42 or the bearing bracket 43, whereas, in the variant of figure 5, the plunger 34 is mounted in the bearing bracket 43 (see the indicated bearing bushing 50). The space between the armature 32 and the bearing bracket 43 is in this case ventilated via a ventilation channel 52 which extends through the bearing bracket 43.

## Claims

1. Solenoid valve (4) with a coil (30), with an armature (32), with a valve seat (38), with a valve element (36) which can be forced against the valve seat (38) by the armature (32), and with a spring (40) which forces the armature (32) away from the valve seat (38), **characterized in that** the armature (32) is assigned a permanent magnet (44).

2. Solenoid valve according to Claim 1, **characterized in that** the permanent magnet (44) is arranged in the magnetic circuit of the solenoid valve (4).

3. Solenoid valve according to Claim 1 or Claim 2, **characterized in that** the permanent magnet (44) is arranged at a side of the armature (32) which is averted from the valve seat (38).

4. Solenoid valve according to Claim 1 or Claim 2, **characterized in that** the permanent magnet (44) is arranged in the armature (32) of the solenoid valve (4) and divides said armature into a portion (32 A) facing towards the valve seat (38) and a portion (32 B) averted from the valve seat (38).

5. Solenoid valve according to Claim 1, **characterized in that** the permanent magnet (44) is arranged at an end side of the armature (32) which faces towards a yoke (43) of the solenoid valve (4), and a further permanent magnet (45) is arranged on the yoke (43), wherein the two permanent magnets (44, 45) repel one another.

6. Solenoid valve according to any of the preceding claims, **characterized in that** a plunger (34), on which the spring (40) is supported, is connected to the armature (32).

7. Assembly with a solenoid valve (4) according to any of Claims 1 to 4 and with a set of control electronics (3), wherein the set of control electronics (3) is configured for applying an exciter current with varying polarities to the coil (30).

8. Assembly according to Claim 7, **characterized in that** the spring (40) imparts an opening force of the order of 3 N, and the solenoid valve (4) is assigned to a clutch actuator of a vehicle transmission.

9. Pump unit for providing a hydraulic pressure for operating an actuator in the drivetrain of a motor vehicle, in particular an actuator for operating a clutch or a transmission, with a pump (2), with a reservoir (6) for hydraulic fluid and with at least one solenoid valve (4) according to any of Claims 1 to 6.
